# EUROPÄISCHE PATENTANMELDUNG

(11) **EP 0 726 184 A2**
(43) Veröffentlichungstag der Anmeldung: **14.08.1996**
(21) Anmeldenummer: 95119082.6
(22) Anmeldetag: 05.12.1995
(51) Int. Cl.: B60R 19/34, F16F 7/12

(54) **Pralldämpfer**

(30) Priorität: 28.01.1995 DE 19502787; 10.08.1995 DE 19529370
(71) Anmelder: Heidemann-Werke GmbH & Co. KG, D-37557 Einbeck (DE)
(72) Erfinder: Altrath, Hans-Dieter, D-37574 Einbeck (DE)
(74) Vertreter: Sobisch, Peter, Dipl.-Ing.

(57) **Zusammenfassung**

Ein zur Halterung einer Stoßstange eines Kraftfahrzeugs bestimmter Pralldämpfer besteht aus einem, die Stoßstange über eine Montageplatte (11) halternden Stützrohr (9), welches innerhalb eines Führungsrohres (6) koaxial geführt ist, wobei das Führungsrohr (6) an dem Fahrgestell befestigt ist. Über kugelartige Formkörper (19), welche in außenseitigen, die Wandungen des Stützrohres (9) und des Führungsrohres (6) durchdringenden Einformungen (17,18) angeordnet sind, ergeben sich im Fall einer Relativverschiebung des Stützrohres (9) innerhalb des Führungsrohres (6) achsparalllele Nuten, wobei die, zur Erzeugung dieser plastischen Verformung aufzuwendende Kraft über die Länge der Relativbewegung der genannten Rohre im wesentlichen konstant ist. Es ergibt sich ein Pralldämpfer mit berechen- und reproduzierbaren Engergieabsorptionseigenschaften.

## Beschreibung

Die Erfindung bezieht sich auf einen Pralldämpfer entsprechend den Merkmalen des Oberbegriffs des Anspruchs 1.

Derartige Pralldämpfer dienen bei Straßenfahrzeugen dazu, die im Fall eines Aufpralls umgesetzte kinetische Energie in kontrollierter Weise sowie mit Hinblick auf eine Schadensbegrenzung zu absorbieren. Sie bestehen zu diesem Zweck aus zwei, relativ zueinander verschiebbaren Bauteilen, deren Verschiebung mit einer Energeiabsorption verbunden ist, wobei der maximal mögliche Verschiebeweg derart bemessen ist, daß im Falle der vollständigen Ausnutzung der Energieabsorptionsfähigkeit Karosserie- und Fahrgestellschäden vermieden werden.

In gesetzlichen, europaeinheitlichen Vorschriften finden sich Regelungen, die den Energieumsatz solcher Pralldämpfer betreffen. Vergleichbare Vorschriften bestehen jedoch auch in anderen Staaten wie USA, Kanada usw. Gegenstand dieser Vorschriften ist jedoch nur die quantitative Festlegung von Parametern wie z.B. Geschwindigkeiten, die diesen Energieumsatz kennzeichnen und nicht die Vorgabe konstruktiver Konzepte, wie dieser Energieumsatz beherrschbar ist.

In diesem Zusammenhang sind Pralldämpfer bekannt, bei welchen innerhalb eines Rohres ein aus einem elastomeren Werkstoff bestehender Pufferkörper angeordnet ist, wobei das Rohr über einen Ringflansch am Fahrgestellrahmen befestigt ist. An einem, mit dem Pufferkörper zusammenwirkenden, koaxial innerhalb des ersten Rohres geführten Rohr ist eine Stoßstange befestigbar. Im Falle einer Relativverschiebung der genannten Rohre verleiht der Pufferkörper dem Gesamtsystem eine begrenzte Elastizität, wobei am Ende der elastischen Phase jedoch der genannte Ringflansch plastisch verformt wird.

Bei einem weiteren bekannten System sind wiederum zwei Rohre koaxial ineinander geführt, wobei jedoch eine Einschnürungsstelle vorgesehen ist, die gleichermaßen die Wandungen des inneren und des äußeren Rohres erfaßt. Im Falle eines Aufpralls soll diese Einschnürung eine plastische Verformung des die Stoßstange tragenden inneren Rohres auslösen.

Ein Charakteristikum dieser bekannten Pralldämpfer besteht darin, daß die Energieumsetzung entlang des Verschiebeweges der genannten Rohrteile nicht gleichförmig ist und zum Teil außerordentlich starke Schwankungen aufweist, wie experimentelle Untersuchungen gezeigt haben. Einschlägige Kraft-Weg-Diagramme zeigen nach Überwinden einer anfänglichen Losbrechkraft oft einen starken Abfall der zur weiteren Relativverschiebung der Rohrelemente aufzuwendenden Kraft. Die Herstellung von Pralldämpfern mit berechen- und insbesondere reproduzierbaren Energieabsorptionseigenschaften gestaltet sich mit diesen bekannten Konzepten somit schwierig.

Es ist die Aufgabe der Erfindung, einen Pralldämpfer der eingangs bezeichneten Art dahingehend zu verbessern, daß sich eine im wesentlichen gleichförmige Kraftaufnahme über den gesamten Verschiebeweg der Bauteile ergibt und insgesamt ein Pralldämpfer mit berechen- und reproduzierbaren Eigenschaften zur Verfügung gestellt wird. Gelöst ist diese Aufgabe bei einem gattungsgemäßen Pralldämpfer durch die Merkmale des Kennzeichnungsteils des Anspruchs 1.

Die Energieabsorption bei dem erfindungsgemäßen Pralldämpfer basiert wiederum auf der Umsetzung von kinetischer Energie in Umformenergie, wobei eines der genannten Bauteile eine plastische Verformung erfährt. Diese plastische Verformung ist erfindungsgemäß derart beschaffen, daß sie zu der Erzeugung einer längsnutartigen Einformung in dem einen der beiden Bauteile führt. Die Achse dieser Längsnut erstreckt sich parallel zu der Richtung, in der die genannten Bauteile relativ zueinander verschiebbar sind. Dieses Konzept setzt voraus, daß ein Umformprofil vorgesehen ist, welches aufgrund der Führung der Bauteile relativ zueinander zwangsläufig mit dem einen Bauteil mit Hinblick auf dessen gezielte plastische Verformung zusammenwirkt. Die Kraftaufnahme, die bei diesem Konzept über einen konstruktiv vorgebbaren Verformungsweg erreichbar ist, hängt von der Geometrie des zu verformen den Bauteils sowie von der werkstoffspezifischen Umformenergie ab. Sämtliche Parameter des Umformprozesses, welche die aufzuwendende Umformkraft beeinflussen, können hierbei konstruktiv zur Bereitstellung eines Pralldämpfers benutzt werden, der bei vorgegebenem Verschiebe- bzw. Umformweg eine gegebene Energieumsetzung bewirken soll. Als weitere Parameter kommen in Betracht die Erhöhung der Zahl der Längsnuten sowie die Anordnung mehrerer Umformprofile. Das, das Umformprofil beinhaltende bzw. tragende Bauteil einerseits und das jeweils andere Bauteil andererseits sind prinzipiell austauschbar, da für die Energieumsetzung nur die Relativbewegung dieser Bauteile maßgeblich ist. Die Geometrie der Bauteile ist grundsätzlich beliebig und kann unter Berücksichtigung der erwünschten Energieumsetzung nach Zweckmäßigkeitsgesichtspunkten ausgewählt werden.

Die Merkmale der Ansprüche 2 bis 4 sind auf zwei mögliche Konkretisierungen des Konzepts der Energieumsetzung gerichtet. So wird vorzugsweise davon ausgegangen, daß das plastisch zu verformende Bauteil als Hohlprofil ausgebildet ist, so daß sich längsnutartige Verformungen entweder durch außenseitige Einformungen oder durch innenseitige, zur Außenseite hin gerichtete Ausformungen herstellen lassen. Demzufolge ist das Umformprofil alternativ nach Art einer Matrize ausgebildet, deren Innenprofil die Formgebung bewirkt oder nach Art eines Domes, dessen Außenprofil die Formgebung bewirkt.

Der eingangs dargelegte Pralldämpfer ist in sämtlichen Funktionszusammenhängen insbesondere bei Straßenfahrzeugen einsetzbar, bei welchen es um eine definierte Energieabsorption durch Relativbewegung zweier Bauteile geht, die wiederum die Verbindungsglieder zwischen weiteren Bauelementen bilden, auf deren Relativbewegung zueinander Einfluß genommen werden soll. Bevorzugter Anwendungsbereich des Pralldämpfers ist jedoch entsprechend den Merkmalen des Anspruchs 5 die Befestigung einer Stoßstange an einem Kraftfahrzeug. Die im Fall eines Aufpralls umzusetzende kinetische Energie soll innerhalb einer vorgebbaren Verformungsstrecke vollständig umgesetzt sein, wobei diese Verformungsstrecke mit Hinblick auf eine Schadensbegrenzung betreffend das Fahrgestell, die Stoßstange und angrenzende Karosserieteile bemessen ist. Angestrebt wird hierbei eine über die Länge des Verformungsweges möglichst gleichförmige Energieabsorption, so daß durch den Umformprozeß eine über den gesamten Verformungsweg konstante Abbremswirkung zur Verfügung gestellt wird. Diese Voraussetzung ist von größter Bedeutung mit Hinblick auf die Bereitstellung von Pralldämpfern mit berechen- und und reproduzierbaren Eigenschaften.

Entsprechend den Merkmalen des Anspruchs 6 sind im Regelfall beide Bauteile als Hohlprofile ausgebildet, die sich gleichachsig zueinander erstrecken und teilweise ineinandergesteckt sind. Letzteres bringt gewisse Führungseigenschaften des äußeren Hohlprofils gegenüber dem inneren Hohlprofil mit sich.

Die Merkmale der Ansprüche 7 und 8 sind auf eine einfach realisierbare Form der Bereitstellung eines Umformprofils gerichtet. Dieses wird hiernach durch radiale Einformungen der Hohlkörper gebildet, innerhalb welchen jeweils Formkörper angeordnet sind, die radial außenseitig über Halteringe gestützt sind. Die Geometrie der Einformungen sowie der Formkörper sind hierbei aneinander angepaßt und die Einformungen bilden in der Anfangsphase punktförmige Auswölbungen der Innenseite der Hohlprofile, aus denen sich im Verformungsfall Längsnuten ergeben. Im einfachsten Fall ist lediglich eine einzige Einformung vorgesehen, so daß sich im Verformungsfall auch nur eine einzige Längsnut ergibt.

Die Merkmale der Ansprüche 9 und 10 sind auf die praktisch wichtigste Ausführungsform gerichtet, wonach die Hohlprofile als Rohrprofile mit kreisförmigen oder polygonalen Querschnitt ausgebildet sind, die teilweise ineinandergesteckt sind, wobei als Formkörper beispielsweise Stahlkugeln benutzt werden, die innerhalb eines Halterohres radial abgestützt sind.

Die Merkmale der Ansprüche 11 bis 13 sind auf die Veränderung der Kraftaufnahmefähigkeit des Pralldämpfers gerichtet, welche auf einer Vervielfachung der Anzahl der Einformungen und auf diese Weise der im Verformungsfall herzustellenden Längsnuten basiert. Es können hiernach im Rahmen eines einzelnen Halterohres - in gleichmäßiger Umfangsverteilung - mehrere Einformungen mit Formkörpern vorgesehen sein. Es können jedoch auch zwei und mehr axial beabstandete Halterohre vorgesehen sein, denen jeweils ein oder auch mehrere Einformungen mit Formkörpern zugeordnet sind. Schließlich kann das Halterohr auch eine solche Länge haben, daß innerhalb desselben mehrere, axial beabstandete Anordnungen von Einformungen vorgesehen sind. Darüber hinaus können auch größenmäßig abgestufte Einformungen mit entsprechend gestalteten Formkörpern zum Einsatz kommen.

Die Merkmale der Ansprüche 14 und 15 sind auf die Befestigung des Pralldämpfers gerichtet, der an seinen Enden jeweils an den Bauelementen angebracht ist, die im Aufprall begrenzt relativ zueinander beweglich sein sollen. Nachdem der Pralldämpfer als Einwegbauteil konzipiert ist, welches im Benutzungsfall, nämlich nach erfolgter plastischer Verformung ausgetauscht werden muß, ist der Pralldämpfer lösbar, insbesondere verschraubbar mit den an diesem angebrachten Bauelementen ausgebildet, so daß ein einfacher Austausch möglich ist.

Wesensmerkmal der vorstehend in ihren Wirkungsprinzipien beschriebenen Pralldämpfer ist, daß bei langgestreckten Hohlprofilen deren Längsrichtung die Richtung bildet, in der ein Stoß absorbiert werden kann.

Die Merkmale der Ansprüche 17 bis 20 hingegen sind auf Pralldämpfer gerichtet, deren Wirkungsweise in einem weiten Rahmen unabhängig von der Stoßrichtung ist, da deren Wirkungsprinzip auf relativ zueinander verschiebbaren ebenen Strukturen beruht, in deren Ebene ein oder mehrere Formkörper wirken, so daß bei Relativbewegung der Bauteile zueinander, deren wenigstens eines eine längsnutartige, durch den Formkörper bedingte Verformung erfährt, wodurch kinetische Energie in Umformenergie umgesetzt wird. Für derartige Pralldämpfer gelten obige Ausführungen im übrigen jedoch sinngemäß, so daß sämtliche Parameter, über welche das Ausmaß der Energieabsorptionsfähigkeit auf konstruktivem Wege variierbar ist, auch hier gelten. Insbesondere können mehrere ebene Bauteile - senkrecht zu ihrer Ebene gestaffelt vorgenommen werden, um die Kraftaufnahmefähigkeit eines solchen Pralldämpfers zu erhöhen.

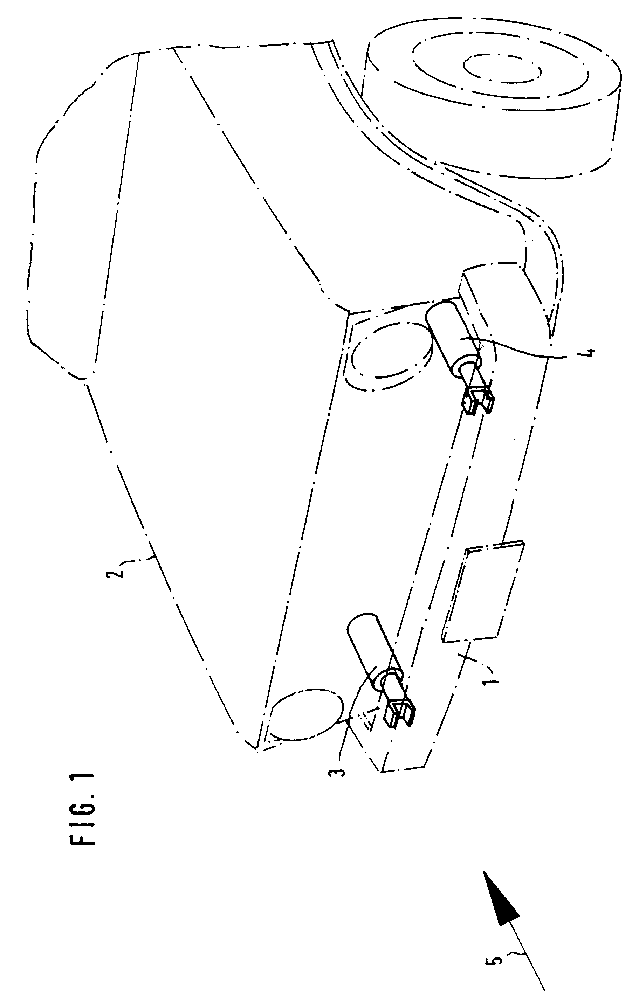

Die Erfindung wird im folgenden unter Bezugnahme auf die zeichnerisch dargestellten Ausführungsbeispiele sowie ein, die Funktion des erfindungsgemäßen Pralldämpfers beschreibendes Kraft-Weg-Diagramm näher erläutert werden. Es zeigen:
Fig. 1 eine perspektivische, die Anbringung erfindungsgemäßer Pralldämpfer erläuternde Darstellung des Vorderteils eines Kraftfahrzeugs;
Fig. 2 eine Darstellung des grundsätzlichen Aufbaus eines erfindungsgemäßen Pralldämpfers im Längsschnitt;
Fig. 3 eine Darstellung des Pralldämpfers gemäß Fig. 2 im Einbauzustand;
Fig. 4 eine Darstellung einer alternativen Ausführungsform eines erfindungsgemäßen Pralldämpfers im Längsschnitt;
Fig. 5 eine Schnittdarstellung des Pralldämpfers der Fig. 4 entsprechend einer Ebene V-V;
Fig. 6 ein die Wirkung eines erfindungsgemäßen Pralldämpfers darstellendes Kraft-Weg-Diagramm.
Fig. 7 eine Darstellung der Draufsicht einer weiteren Ausführungsform eines erfindungsgemäßen Pralldämpfers;
Fig. 8 eine Schnittdarstellung des Pralldämpfers entsprechend einer Ebene VIII-VIII der Fig. 7;
Mit 1 ist in Fig. 1 die vorderseitige Stoßstange eines Kraftfahrzeugs 2 bezeichnet, welche über rechts- und linksseitige Pralldämpfer 3, 4 in zeichnerisch nicht dargestellter Weise an dem Fahrgestell des Kraftfahrzeugs befestigt ist. Der Zweck dieser Pralldämpfer 3, 4 besteht darin, die Stoßstange 1 in Richtung des Pfeiles 5 in definierter Weise derart nachgiebig zu stützen, daß bis zu bestimmten Geschwindigkeiten keine bleibenden Verformungen weder an der Stoßstange noch an dem Fahrgestell auftreten. Dies wird dadurch erreicht, daß die Pralldämpfer 3, 4 zumindest in Richtung des Pfeiles 5, somit in ihren jeweiligen Achsrichtungen um konstruktiv vorgegebene Maße komprimierbar sind, und zwar derart, daß die der vorgegebenen Geschwindigkeit entsprechende kinetische Energie irreversibel umgewandelt wird. Die Befestigung der Stoßstange 1 relativ zu in der Zeichnung nicht dargestellten Karosserieteilen ist im übrigen derart beschaffen, daß im Falle einer Kompression der Pralldämpfer 3, 4 durch eine verdrängte Stoßstange 1 keine Karosserieteile beschädigt werden.

Die rückseitige Stoßstange kann grundsätzlich in gleicher Weise an dem Fahrgestell abgestützt sein, so daß sich ein näheres Eingehen hierauf erübrigt. Zur Erläuterung einer ersten Ausführungsform eines erfindungsgemäßen Pralldämpfers wird im folgenden zunächst auf die Zeichnungsfiguren 2, 3 Bezug genommen.

Der Pralldämpfer 3 besteht aus einem Führungsrohr 6, welches über einen Flansch 7, z.B. einen Ringflansch an dem Fahrgestellrahmen des Kraftfahrzeugs befestigt ist. Das Führungsrohr 6, dessen Achse mit 8 bezeichnet ist, dient der koaxialen Führung eines Stützrohres 9, welches an seinem einen Ende 10 aus dem Führungsrohr 6 herausragt.

Der Flansch 7 steht mit dem Führungsrohr 6 in fester Verbindung und kann mit diesem verschweißt sein. Es kann jedoch auch das System, bestehend aus Flansch 7 und Führungsrohr 6 grundsätzlich einstückig ausgebildet sein.

Mit 11 ist eine Montageplatte bezeichnet, die an der Stirnseite des Endes 10 des Stützrohres 9 in geeigneter Weise befestigt ist, beispielsweise mit diesem verschweißt ist. Die Montageplatte 11 dient unter Zwischenanordnung eines Kunststoffteiles 12 der Befestigung an einem Querträger 13, der mit der Stoßstange in fester Verbindung steht.

Mit 14 ist ein aus Kunststoff bestehender Zentrierstift bezeichnet, der in zueinander fluchtende Bohrungen 14 der Montageplatte 11 und 15 des Kunststoffkeiles 12 eingesetzt ist. Die Montageplatte 11 ist im übrigen in geeigneter, vorzugsweise lösbarer Weise an dem Querträger 13 befestigt.

Mit 16 ist ein, das Führungsrohr 6 außenseitig mit geringem Abstand umgebendes Halterohr bezeichnet, welches seinerseits an dem Fahrgestell des Kraftfahrzeugs befestigt ist.

In zwei, einander diametral gegenüberliegende, in die Wandungen des Führungsrohres 6 und des in dieses eingesteckten Stützrohres 9 eingeformte, kugelkalottenförmige Einformungen 17, 18 sind jeweils kugelförmige Formkörper 19 eingelegt, wobei das radiale Spiel zwischen dem Halterohr 16 und der Außenseite des Führungsrohres 6 in jedem Fall derart bemessen ist, daß die Formkörper 19 in den genannten Einformungen sicher gehalten sind. Dieses Spiel ist ferner derart bemessen, daß das Führungsrohr 6 mit in die Einformungen 17, 18 eingelegten Formkörpern 19 in Richtung des Pfeiles 20 in das Halterohr 16 einschiebbar ist.

Die Tiefe der Einformungen 17, 18 sowie die Abmessungen der Formkörper 19 sind im übrigen derart ausgelegt, daß die Formkörper innerhalb des Halterohres 16 im wesentlichen spielfrei gehalten sind.

Die Wirkungsweise des Pralldämpfers 3 besteht nunmehr darin, daß bei einer, in Richtung des Pfeiles 20 auf dem Querträger 13 bzw. die Montageplatte 11 einwirkenden Kraft das Stützrohr 9 relativ zu dem Führungsrohr 6 in Richtung des Pfeiles 20 verschoben wird, und zwar derart, daß über die Formkörper 19 entsprechend der radialen Tiefe der Einformungen 17, 18 axiale Nuten in die Wandungen des Stützrohres 9 eingeformt werden. Die über die Montageplatte 11 übertragene kinetische Energie wird auf diese Weise irreversibel in Umformenergie umgesetzt.

Mit 21 ist das Streckenelement entlang der Achse 8 zwischen der Ebene der Montageplatte 11 und der zugekehrten Stirnseite des Führungsrohres 6 bezeichnet, welches theoretisch als maximaler Verformungsweg zur Verfügung steht. Die vorzugsweise aus Stahl bestehenden Formkörper 19, die Wandstärke des Stützrohres 9 sowie dessen radiale Abmessungen, die radiale Tiefe der Einformungen 17, 18 und das Streckenelement 21 sind derart bemessen, daß die der maximal möglichen plastischen Verformung entlang des Streckenelements 21 entsprechende Umformenergie einer definierten kinetischen Energie entspricht, welche im Fall eines Aufpralls umzusetzen ist.

Der erfindungsgemäße Pralldämpfer 3 muß im Falle eines Aufpralls, d.h. nach vollzogener Umformung des Stützrohres 3 ausgetauscht werden und steht aus diesem Grunde über die Montageplatte 11 mit dem Querträger 13 und über den Flansch 7 mit dem Fahrgestell des Kraftfahrzeugs in lösbarer Verbindung, beispielsweise in einer Schraubverbindung.

Das radiale Spiel zwischen dem Stützrohr 9 und dem Führungsrohr 6 ist derart bemessen, daß eine spielfreie und zuverlässige Halterung der Stoßstange gegeben ist.

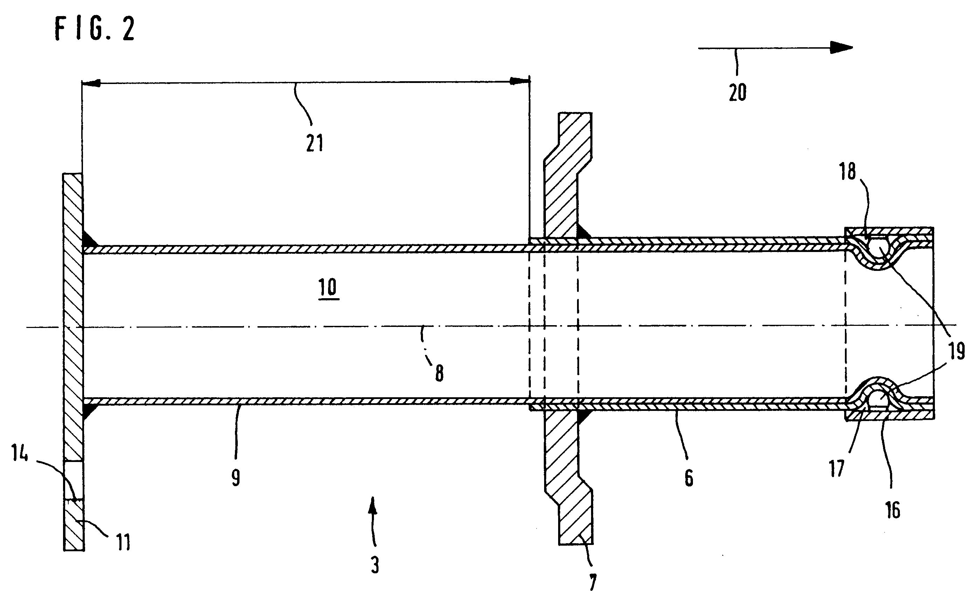

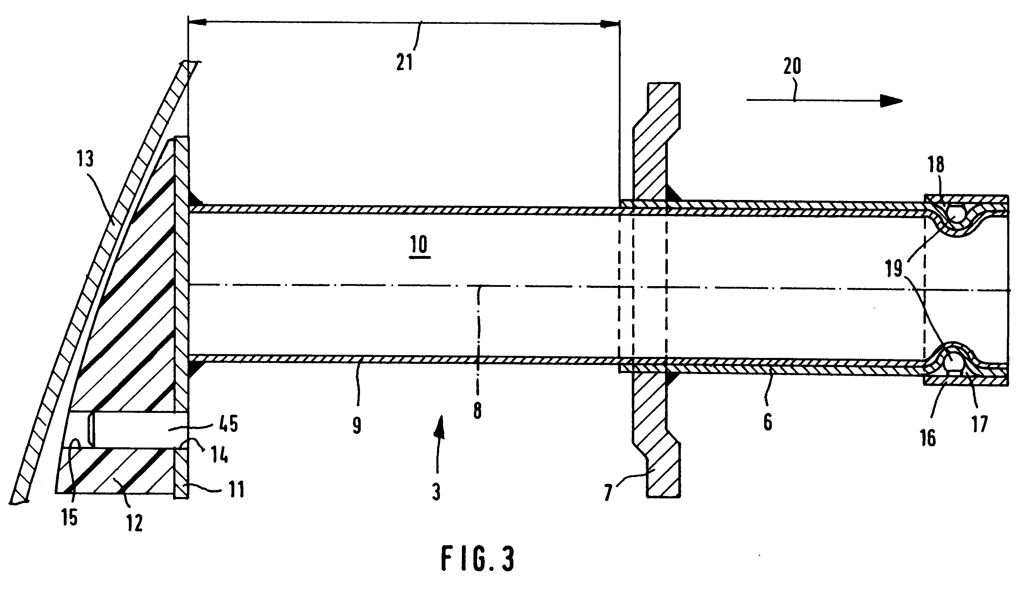

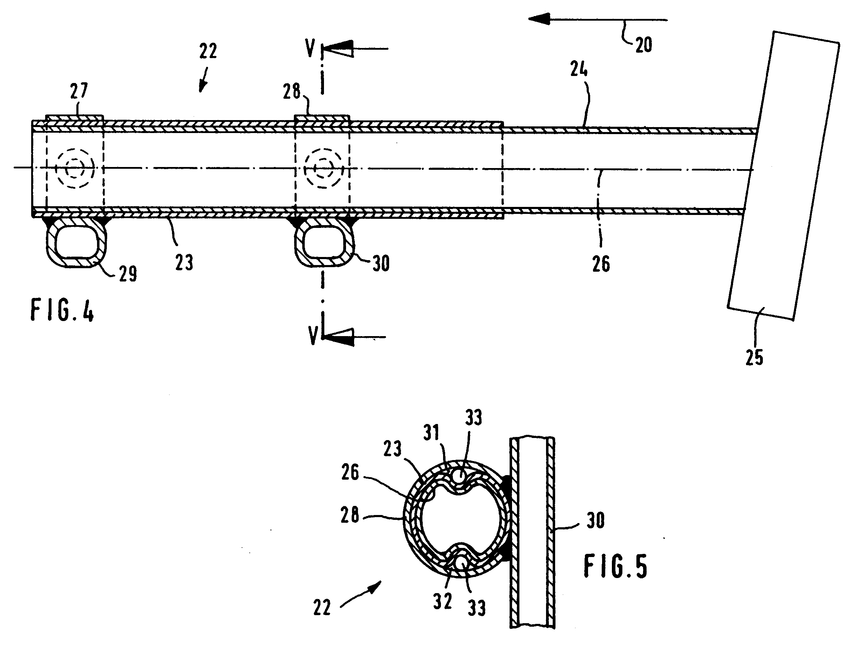

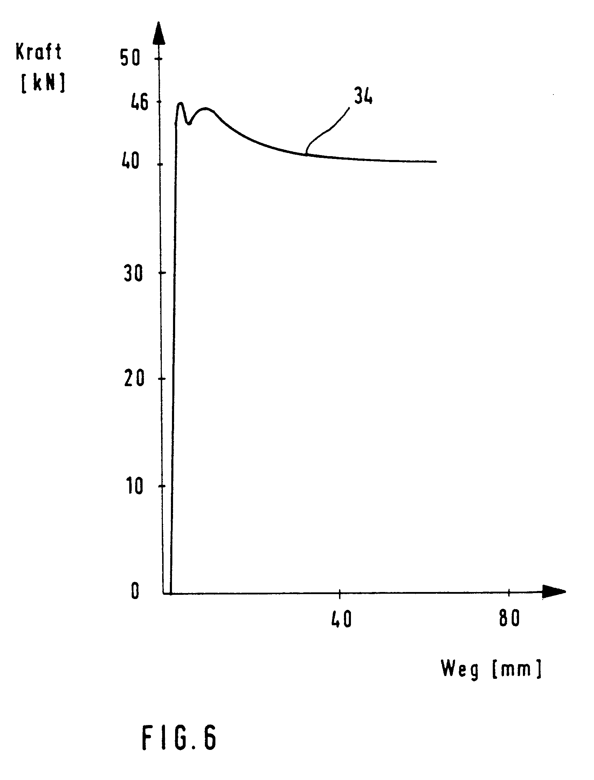

Das Ausmaß der Kraftaufnahmefähigkeit des Pralldämpfer kann in vielfältiger Weise ausgehend von den oben dargelegten, für die Energieumsetzung maßgeblichen Parametern variiert werden. Hinzu treten Variationen der Anzahl sowie der Geometrie der Formkörper sowie der diesen jeweils zugeordneten Einformungen. In den Fig. 4 und 5 ist lediglich beispielhaft eine mögliche konstruktive Variante zu dem Prinzip gemäß den Fig. 2 und 3 wiedergegeben.

Der in den Fig. 4 und 5 gezeigte Pralldämpfer 22 besteht wiederum aus einem äußeren Führungsrohr 23, in welches ein Stützrohr 24 eingesteckt ist. Diese, zu der Achse 26 koaxiale Rohranordnung ist durch zwei, axial mit Abstand zueinander angeordnete Halterohre 27, 28 hindurchgeführt, wobei die Halterohre 27, 28 über Zwischenträger 29, 30, die mit den Halterohren 27, 28 in fester, beispielsweise in einer Schweißverbindung stehen, an dem Fahrgestell des Kraftfahrzeugs befestigt sind.

Das Führungsrohr 23 ist im übrigen in einer, dem Ausführungsbeispiel der Fig. 2 und 3 entsprechenden, jedoch zeichnerisch nicht dargestellten Weise über einen Flansch an dem Fahrgestellrahmen befestigt.

Mit 31, 32 sind wiederum außenseitige kugelkalottenförmige, die Wandungen des Führungsrohres 23 und des Stützrohres 26 gleichermaßen durchdringende Einformungen bezeichnet, die einander im Bereich der Halterohre 27, 28 diametral gegenüberliegen und jeweils der Aufnahme eines kugelförmigen, vorzugsweise aus Stahl bestehenden Formkörpers 33 dienen. Hinsichtlich der Abmessungen der Halterohre 27, 28, des Führungsrohres 23 sowie des Stützrohres 24 und der Bemessung der Einformungen 31, 32 gilt analoges wie bei dem Beispiel gemäß den Fig. 2 und 3.

Man erkennt aus obigen Ausführungen, daß ein Aufprall im Bereich des Querträgers 25 eine Relativbewegung des Stützrohres 24 innerhalb des Führungsrohres 23 zur Folge hat, und zwar unter plastischer Verformung des Stützrohres 24 im Bereich der Halterohre 27, 28. Wesensmerkmal dieser energieabsorbierenden plastischen Verformung ist die Bildung achsparalleler Nuten durch vier untereinander gleiche Formkörper 33, so daß bei gegebenem Wegelement einer Verschiebung des Stützrohres 26 relativ zu dem Führungsrohr 23 das Ausmaß der aufzuwendenden Verformungsenergie bei ansonsten unveränderten geometrischen Verhältnissen gegenüber dem Ausführungsbeispiel gemäß den Fig. 2 und 3 verdoppelt ist.

Ein Wesensmerkmal der Wirkungsweise des erfindungsgemäßen Pralldämpfers besteht darin, daß - entlang des Weges der Relativbewegung von Stütz- und Führungsrohr gesehen - der Kraftaufwand für die Relativbewegung vergleichsweise konstant ist. Ein an einem Prototyp eines erfindungsgemäßen Pralldämpfers experimentell aufgenommenes, in Fig. 6 gezeigtes Kraft-Weg-Diagramm verdeutlicht diesen Sachverhalt. Das Diagramm zeigt eine Funktion 34, welche die zur Relativbewegung der genannten Rohre aufzuwendende Kraft in Abhängigkeit vom Weg dieser Relativbewegung zeigt. Der gesamte Verformungsweg bei dieser Meßanordnung betrug ca. 80 mm und es wurde entlang praktisch des gesamten Weges eine relativ konstante Kraft gemessen. Der Versuch wurde mit einem Pralldämpfer durchgeführt, dessen Stützrohr eine Wanddicke von 2,5 mm und einen Innendurchmesser von 32 mm aufwies. Insgesamt wurden vier kugelförmige Formkörper benutzt.

Dies bedeutet, daß der erfindungsgemäße Pralldämpfer ein g ünstiges Energieabsorptionsverhalten aufweist, welches zu kalkulierbaren und reproduzierbaren Ergebnissen führt.

Es wird dieses Ergebnis darauf zurückgeführt, daß die Energieabsorption zum weitaus überwiegenden Teil durch plastische Verformung des Stützrohres stattfindet und nur zu einem untergeordneten Teil auf der Überwindung von Reibungskräften beruht. Durch wechselnde Umgebungstemperaturen innerhalb eines üblichen Rahmens wird die Funktionsfähigkeit des Pralldämpfers praktisch nicht beeinflußt, so daß dessen Wirkungsweise als hinreichend temperaturkonstant angesehen werden kann. Es handelt sich bei dem erfindungsgemäßen Pralldämpfer um ein Einwegbauteil, welches nach erfolgter Relativbewegung des Stützrohres innerhalb des Führungsrohres verworfen und durch ein neues ersetzt wird. Die Befestigungsmöglichkeiten des Pralldämpfers an dem Fahrgestell einerseits und einer Stoßstange bzw. einem Querträger andererseits sind vorzugsweise mit Hinblick auf diese Eigenschaft ausgelegt. d.h. leicht lösbar ausgebildet.

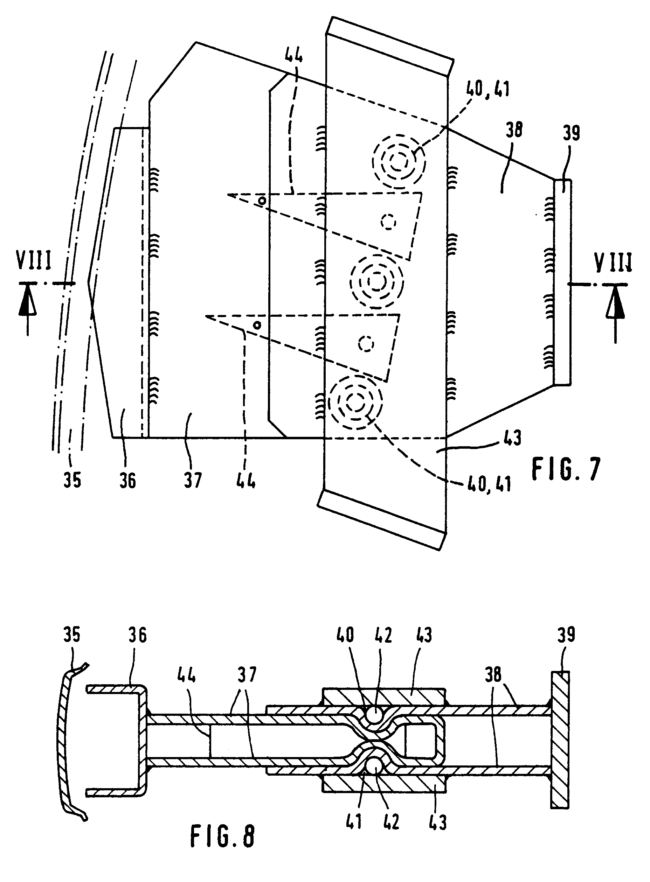

Die Fig. 7 und 8 zeigen eine Abwandlung des in den Fig. 2 bis 5 gezeigten Prinzips eines Pralldämpfers, dessen grunsätzliches Funktionsprinzip jedoch unverändert beibehalten worden ist.

So ist an einer Stoßstange 35 unter Zwischenanordnung eines U-förmigen Halteprofils 36 eine U-förmige Stützplatte 37 fest angebracht, welche funktionell den Stützrohren 9, 24 der vorangegangenen Ausführungsbeispiele entspricht. Die U-Profile des Halteprofils 36 und der Stützplatte 37 erstrecken sich im wesentlichen quer zur Fahrtrichtung bzw. in Längsrichtung der Stoßstange 35. Aufgrund Ihrer festen Verbindung mit dem Halteprofil 36 werden die sich horizontal erstreckenden oberen und unteren Schenkel des U-förmigen Profils der Stützplatte 37 in festem Abstand zueinander gehalten. Sie erstrecken sich an ihrem, dem Halteprofil 36 abgekehrten Ende in den Zwischenraum zwischen zwei, sich ebenfalls horizontal mit Abstand übereinander erstreckenden Führungsplatten 38 hinein, die ihrerseits an einem, mit dem zeichnerisch nicht dargestellten Fahrgestellrahmen in fester Verbindung stehenden Träger 39 befestigt sind. Diese Führungsplatten 38 entsprechen funktionell den Führungsrohren 6, 23 der oben bereits beschriebenen Ausführungsbeispiele.

Mit 40, 41 sind drei, jeweils den oberen und unteren Führungsplatten 38 zugeordnete, kugelkalottenförmige Einformungen bezeichnet, die gleichermaßen auch die oberen und unteren Schenkel der Stützplatte 37 erfassen und der Aufnahme kugelförmiger Formkörper 42 dienen. Die oberen und unteren Einformungen 40, 41 sind genau übereinander angeordnet und es werden die Formkörper 42 in diesen Ausnehmungen jeweils mittels oberer und unterer Halteplatten 43 fixiert, die ihrerseits in fester Verbindung einerseits mit den Führungsplatten 38 - hierbei die Einformungen 40, 41 überdeckend - und andererseits mit dem zeichnerisch nicht dargestellten Fahrgestellrahmen stehen.

Der gezeigte Pralldämpfer ist somit insgesamt durch sechs Formkörper 42 gekennzeichnet.

Ein wesentlicher Unterschied dieses Pralldämpfers im Vergleich zu den vorstehend bereits beschriebenen Ausführungsformen besteht darin, daß dieser gleichermaßen zur Aufnahme solcher Stöße geeignet ist, die unter einem Winkel zur Längsrichtung des Fahrgestellrahmens auftreten. Denn die Verformungsrichtung, welche bei einer Relativbewegung der Stützplatte 37 gegenüber den Führungsplatten 38 auftreten kann, ist konstruktiv nur dahingehend festgelegt, daß diese in der Ebene der plattenförmigen unteren und oberen Schenkel der Stützplatte 37 auftreten muß.

Hinsichtlich der Kraftaufnahmefähigkeit kann dieses Pralldämpferprinzip wiederum durch Variation der Größe und Geometrie der Formkörper, deren Anzahl sowie den Wandstärken sowie der Zahl der zu verformenden Stützplatten bzw. Stützprofile variiert werden. Vorausgesetzt werden muß lediglich, daß die Halteplatten 43 im Verhältnis zu der Stützplatte 37 starr sind und daß das System der Stützplatten 37 als solches hinreichend knickfest ist und zur Übertragung stoßartig auftretender Kräfte in Richtung auf die Führungsplatten 38 hin geeignet ist. Zur Versteifung, insbesondere zur Verbesserung der Knickfestigkeit können zu diesem Zweck Versteifungsprofile 44 in den Zwischenraum zwischen den oberen und unteren Schenkeln der Stützplatte 37 eingebracht werden.

In der Verwendung plattenartiger, sich horizontal erstreckender Stütz- und Führungsprofile nach Art des Ausführungsbeispiels gemäß den Fig. 7 und 8 ist somit in Verbindung mit beispielsweise kugel- oder kegelförmigen Formkörpern ein Pralldämpfer realisierbar, der im wesentlichen unabhängig von der Stoßrichtung gleiche und insbesondere reproduzierbare Pralldämpfer- und Energieabsorptionseigenschaften aufweist.

## Patentansprüche

1. Pralldämpfer (3,4,22) für Fahrzeuge, bestehend aus wenigstens zwei, relativ zueinander in einer Richtung (20) unter plastischer Verformung des einen Bauteils verschiebbar geführten Bauteilen,
gekennzeichnet durch
- wenigstens ein, an dem anderen Bauteil angeordnetes, zur Führung des einen Bauteils dienendes, zur Erzeugung wenigstens einer längsnutartigen, sich in der Richtung (20) erstreckenden Verformung des letztgenannten Bauteils bestimmten und ausgestalteten Umformprofils.

2. Pralldämpfer nach Anspruch 1,
dadurch gekennzeichnet,
- daß zumindest das eine, während der Relativverschiebung zu verformende Bauteil als Hohlprofil ausgestaltet ist.

3. Pralldämpfer nach Anspruch 2,
dadurch gekennzeichnet,
- daß das Umformprofil als Profildorn ausgebildet ist, über welchen das genannte eine Bauteil geführt ist.

4. Pralldämpfer nach Anspruch 2,
dadurch gekennzeichnet,
- daß das Umformprofil als Innenprofil ausgebildet ist, durch welches das genannte eine Bauteil hindurchgeführt ist.

5. Pralldämpfer nach einem der Ansprüche 1 bis 4,
dadurch gekennzeichnet,
- daß die Bauteile zur Halterung der Stoßstangen von Fahrzeugen mit der Maßgabe ausgebildet sind, daß eine bestimmte kinetische Energie bei einem gegebenen Ausmaß an Relativverschiebung in Umformenergie umsetzbar ist.

6. Pralldämpfer nach einem der Ansprüche 1 bis 5,
dadurch gekennzeichnet,
- daß beide Bauteile als Hohlprofile ausgestaltet sind, die sich gleichachsig zueinander erstrecken und teilweise ineinander geführt sind.

7. Pralldämpfer nach Anspruch 6,
dadurch gekennzeichnet,
- daß die ineinandergesteckten Hohlprofile wenigstens eine außenseitige Einformung (17,18;31,32) aufweisen, welche sich in den Wandungen beider Hohlprofile erstreckt,
- daß die Einformung einen Formkörper (19,33) aufnimmt und gestaltlich an diesen angepaßt ist und
- daß die Einformung sowie der in dieser aufgenommene Formkörper außenseitig über einen Halterring gestützt sind.

8. Pralldämpfer nach Anspruch 7,
dadurch gekennzeichnet,
- daß der Haltering über die, einen Formkörper tragende Einformung axial schiebbar ist und
- daß das äußere Hohlprofil an dem Fahrzeugrahmen und das innere Hohlprofil an der Stoßstange oder umgekehrt befestigbar sind.

9. Pralldämpfer nach einem der Ansprüche 6 bis 8,
dadurch gekennzeichnet,
- daß die Hohlprofile als Rohrprofile mit kreisförmigem oder polygonalen Querschnitt ausgestaltet sind,
- daß der/die Halteringe als Halterohr (16,27,28) mit kreisförmigem oder entsprechendem polygonalem Querschnitt ausgestaltet ist/sind und
- daß sich die Rohrprofile koaxial zu dem Halterohr (16,27,28) erstrecken.

10. Pralldämpfer nach einem der Ansprüche 7 bis 9,
dadurch gekennzeichnet,
- daß der Formkörper (19,33) als Kugel oder Kegel ausgebildet ist und daß die Einformungen (17,18; 31,32) eine dementsprechende kugelkalotten- oder kegelförmige Gestalt aufweisen.

11. Pralldämpfer nach einem der Ansprüche 7 bis 10,
dadurch gekennzeichnet,
- daß - in einer radialen Ebene gesehen - mehrere, untereinander gleich beschaffene Einformungen (17,18;31,32) in gleichförmiger Umfangsverteilung vorgesehen sind, die jeweils einen Formkörper (19,33) aufnehmen.

12. Pralldämpfer nach einem der Ansprüche 7 bis 10,
dadurch gekennzeichnet,
- daß mehrere, größenmäßig abgestufte Einformungen vorgesehen sind, die jeweils einen entsprechend bemessenen Formkörper aufnehmen.

13. Pralldämpfer nach einem der Ansprüche 7 bis 12,
dadurch gekennzeichnet,
- daß in mehreren, axial voneinander beabstandeten radialen Ebenen jeweils untereinander gleich beschaffene, in gleichförmige Umfangsverteilung vorliegende Einformungen (17,18;31,32) vorgesehen sind, in die jeweils ein Formkörper eingesetzt ist, der durch einen Haltering bzw. ein Halterohr (16, 27,28) gehalten ist.

14. Pralldämpfer nach einem der Ansprüche 7 bis 13,
dadurch gekennzeichnet,
- daß der Haltering/das Halterohr am Fahrzeugrahmen befestigt ist und
- daß die Befestigung der Bauteile/der Hohlprofile am Fahrzeugrahmen sowie an der Stoßstange lösbar ausgebildet ist.

15. Pralldämpfer nach einem der Ansprüche 7 bis 14,
gekennzeichnet durch
- einen, das äußere Hohlprofil/das Rohrprofil umgebenden, mit diesem in fester Verbindung stehenden, zur Befestigung am Fahrgestellrahmen dienenden Flansch (7) und
- eine, an dem einen, aus dem äußeren Hohlprofil/dem äußeren Rohrprofil herausragenden Ende fest angebrachten, der Befestigung an einer Stoßstange dienenden Montageplatte (11).

16. Pralldämpfer nach einem der Ansprüche 9 bis 15,
gekennzeichnet durch
- eine zu der, sich parallel zu der Richtung (20) erstreckende Achse (8) rotationsymmetrische Anordnung zweier, die genannten Bauteile bildender Rohrelemente, wenigstens ein Halterohr (16,27,28) und einen, an dem äußeren Rohrelement angebrachten Flansch (7).

17. Pralldämpfer nach einem der Ansprüche 1 oder 3 bis 5,
dadurch gekennzeichnet,
- daß die Bauteile eine ebene Struktur aufweisen und sich parallel zueinander erstrecken und
- daß sich die zu erzeugende längsnutartige Verformung in der Ebene des einen der genannten Bauteile erstreckt.

18. Pralldämpfer nach Anspruch 17
dadurch gekennzeichnet,
- daß das Umformprofil durch wenigstens eine, einen Formkörper (42) aufnehmende Einformung (40,41) der Bauteile gebildet ist,
- daß die Einformung (40,41) alle Bauteile durchsetzt und
- daß der Formkörper (42) außenseitig über eine Halteplatte (43) gestützt ist.

19. Pralldämpfer nach Anspruch 17 oder 18,
dadurch gekennzeichnet,
- daß die Bauteile durch wenigstens eine Stützplatte (37) und wenigstens eine Führungsplatte (38) gebildet werden und
- daß die Stützplatte (37) zur Verbindung mit der Stoßstange und die Führungsplatte (38) zur Verbindung mit dem Fahrgestellrahmen des Fahrzeugs bestimmt und ausgestaltet ist.

20. Pralldämpfer nach Anspruch 18 oder 19,
dadurch gekennzeichnet,
- daß die wenigstens eine Halteplatte (43) zur lösbaren Verbindung mit dem Fahrgestellrahmen bestimmt und ausgestaltet ist,
- daß die Bauteile bzw. die wenigstens eine Stützplatte (37) sowie die wenigstens eine Führungsplatte (38) jeweils zur lösbaren Verbindung mit der Stoßstange bzw. den Fahrgestellrahmen bestimmt und ausgestaltet sind und
- daß der Formkörper (42) durch die Halteplatte (43) mit der Maßgabe innerhalb der Einformung (40,41) gehalten ist, daß eine Relativbewegung der Bauteile bzw. der Stützplatte (37) gegenüber der Führungsplatte (38) die Erzeugung einer längsnutartigen Verformung durch den Formkörper (42) zur Folge hat.
